# EUROPÄISCHE PATENTSCHRIFT

(11) **EP 3 086 886 B1**
(45) Veröffentlichungstag und Bekanntmachung des Hinweises auf die Patenterteilung: **16.11.2022**
(21) Anmeldenummer: 14809364.4
(22) Anmeldetag: 04.12.2014
(51) Int. Cl.: B06B 1/06, G10K 9/22, G01S 7/521, G01S 15/931

(54) **VERFAHREN ZUM HERSTELLEN EINES ULTRASCHALLSENSORS FÜR EIN KRAFTFAHRZEUG**
METHOD FOR PRODUCING AN ULTRASONIC SENSOR FOR A MOTOR VEHICLE
PROCÉDÉ DE FABRICATION D'UN CAPTEUR À ULTRASONS POUR UN VÉHICULE AUTOMOBILE

(30) Priorität: 23.12.2013 DE 102013022063
(43) Veröffentlichungstag der Anmeldung: 02.11.2016
(73) Patentinhaber: Valeo Schalter und Sensoren GmbH, 74321 Bietigheim-Bissingen (DE)
(72) Erfinder: WEHLING, Hans-Wilhelm, 74321 Bietigheim-Bissingen (DE); HAMM, Wolfgang, 74321 Bietigheim-Bissingen (DE)
(74) Vertreter: Enge, Sebastian
(86) Internationale Anmeldenummer: PCT/EP2014/076553
(87) Internationale Veröffentlichungsnummer: WO 2015/096959

(56) Entgegenhaltungen:
- DE-A1- 3 347 442
- DE-A1- 10 125 272
- DE-A1- 10 201 990
- DE-A1- 10 221 303
- DE-A1- 19 832 072
- DE-A1-102009 022 187
- DE-A1-102011 105 051
- JP-A- 2004 015 150

## Beschreibung

Die Erfindung betrifft ein Verfahren zum Herstellen eines Ultraschallsensors für ein Kraftfahrzeug, bei welchem für den Ultraschallsensor eine Membran zum Aussenden von Ultraschallsignalen in eine Senderichtung und ein Sensorgehäuse bereitgestellt werden, in und/oder an welchem die Membran befestigt wird, wobei das Sensorgehäuse eine in die Senderichtung der Membran weisende Frontseite und eine Rückseite aufweist, welche in eine zur Senderichtung entgegengesetzte rückwärtige Richtung weist, und wobei das Sensorgehäuse an der Rückseite mit einer rückseitigen Montageöffnung für Komponenten des Ultraschallsensors ausgebildet wird. Die Erfindung betrifft außerdem einen Ultraschallsensor für ein Kraftfahrzeug sowie ein Kraftfahrzeug mit einem solchen Ultraschallsensor.

Ultraschallsensoren für Kraftfahrzeuge sind bereits Stand der Technik und können in an sich bekannter Weise im Frontbereich und im Heckbereich eines Kraftfahrzeugs verbaut werden, wie beispielsweise an den Stoßfängern. Die Ultraschallsensoren sind Fahrerassistenzeinrichtungen zugeordnet und liefern Informationen über die Fahrzeugumgebung, und genauer gesagt über die Abstände zwischen dem Fahrzeug einerseits und den in seiner Umgebung befindlichen Hindernissen andererseits. Fahrerassistenzeinrichtungen können dabei beispielsweise Parkassistenzsysteme, Systeme zur Totwinkelüberwachung, Systeme zur Abstandshaltung, Bremsassistenzsysteme und dergleichen sein.

Es ist bereits bekannt, dass derartige Ultraschallsensoren in zugeordneten Verkleidungsteilen, beispielsweise in Stoßfängern, unverdeckt und somit sichtbar verbaut angeordnet sind. Dies bedeutet, dass sie in durchgängigen Aussparungen bzw. Durchgangsöffnungen in dem zugeordneten Verkleidungsteil des Fahrzeugs angeordnet sind und außenseitig sichtbar sind. Hier erstreckt sich die topfförmige Membran des Ultraschallsensors - der so genannte Aluminiumtopf - durch die Durchgangsöffnung des Verkleidungsteils hindurch, sodass eine Frontseite der Membran mit der äußeren Oberfläche des Verkleidungsteils bündig abschließt.

Darüber hinaus sind auch verdeckt verbaute Wandler bzw. Ultraschallsensoren bekannt. Diese sind somit bei einer Betrachtung des Verkleidungsteils von außen nicht sichtbar und durch das Verkleidungsteil verdeckt. Bei derartig verbauten Ultraschallsensoren direkt hinter dem Verkleidungsteil werden Ultraschallsignale durch das Material des Verkleidungsteils - üblicherweise Kunststoff - hindurch gesendet und empfangen.

Das Interesse richtet sich vorliegend insbesondere auf sichtbar und somit nicht-verdeckt verbaute Ultraschallsensoren, deren Membranen in einer durchgängigen Aussparung des zugeordneten Verkleidungsteils angeordnet sind. Ein solcher Ultraschallsensor wird üblicherweise mittels einer Halterung aus Kunststoff an dem Verkleidungsteil befestigt, wobei diese Halterung mit einem doppelseitigen Klebeband, warm verstemmt oder aber mit Ultraschall an dem Verkleidungsteil angebracht ist. Der Ultraschallsensor kann dann in die Halterung eingebracht und an dieser befestigt werden. Die Verwendung einer solchen Halterung zur sichtbaren Montage eines Ultraschallsensors an einem Stoßfänger ist beispielsweise aus dem Dokument DE 10 2007 043 500 A1 bekannt. Hier wird das Sensorgehäuse einschließlich der Membran in die Halterung eingerastet, welche direkt mit dem Stoßfänger verbunden ist.

Ein Verfahren zum Herstellen eines Ultraschallsensors ist beispielsweise aus der EP 2 027 580 B1 bekannt. Es wird eine erste Baugruppe gebildet, indem ein Piezoelement an einem Membranboden einer topfförmigen Membran befestigt wird. Diese erste Baugruppe wird dann zur Bildung einer zweiten Baugruppe in ein weichelastisches Entkopplungselement eingesetzt. Diese so gebildete zweite Baugruppe wird dann zur Bildung einer dritten Baugruppe rastend in einen Gehäuseabschnitt eines Sensorgehäuses des Ultraschallsensors eingesetzt. Das Entkopplungselement wird in einer Montagerichtung in den Gehäuseabschnitt eingesetzt, die zur Abstrahlrichtung des Ultraschallsensors entgegengesetzt ist.

Ein weiteres Verfahren beschreibt die DE 101 25 272 A1. Bei diesem Herstellungsverfahren wird die Membran des Ultraschallsensors zunächst in eine Zweikomponenten-Spritzanlage angelegt. In einem weiteren Arbeitsschritt wird ein Kunststoffgehäuse um die Membran gespritzt. Nachdem das Kunststoffgehäuse ausgehärtet ist, wird in einem weiteren Schritt ein gummiartiges Entkopplungselement zwischen die Membran und das Kunststoffgehäuse gespritzt. Somit wird eine exakte und dauerhafte Positionierung der Membran gegenüber dem Sensorgehäuse gewährleistet.

Ein bekanntes Verfahren, welches zum Herstellen eines Ultraschallsensors dient und dem Verfahren aus dem Dokument EP 2 027 580 B1 ähnelt, wird nachfolgend unter Bezugnahme auf Fig. 1 näher erläutert: Zunächst werden eine topfförmige Membran 1 sowie ein einstückiges Sensorgehäuse 2 für einen Ultraschallsensor 3 bereitgestellt. Die

Membran 1 wird zunächst extern mit einem Oberflächenschutz versehen. Das Sensorgehäuse 2 ist von seiner in Senderichtung 4 der Membran 1 weisenden Frontseite 5 so ausgelegt, dass es die Membran 1 zusammen mit einem Entkopplungselement 6 aufnehmen kann. Dazu weist das Sensorgehäuse 2 eine frontseitige Öffnung 7 auf, durch welche eine Aufnahme für die Membran 1 und das Entkopplungselement 6 gebildet ist. Die Membran 1 weist einen umlaufenden Kragen 8 auf. In der Vormontage wird die Membran 1 zunächst in das Entkopplungselement 6 eingedrückt. Eine durch die Membran 1 und das Entkopplungselement 6 gebildete Einheit wird dann von der Frontseite 5 in das Sensorgehäuse 2 bzw. in die frontseitige Öffnung 7 lagerichtig montiert. Dann wird auf die Membran 1 ein zusätzlicher Entkopplungsring 19 mit angespritzter Silikonoberfläche aufgeschoben und mittels Laserschweißen mit dem Sensorgehäuse 2 fest mechanisch verbunden. In einer zweiten Montagelinie wird dann ein Piezoelement 9 durch eine rückseitige Montageöffnung 10 des Sensorgehäuses 2 in die Senderichtung 4 in einen Innenraum 11 des Sensorgehäuses 2 eingebracht und mithilfe eines Klebers an einer dem Innenraum 11 zugewandten Rückseite 12 eines Membranbodens 13 befestigt. Ein solches Verfahren bzw. die Wahl eines geeigneten Klebstoffs ist in dem Dokument DE 10 2011 120 391 A1 beschrieben. In einem weiteren Schritt werden in der zweiten Montagelinie Kontaktelemente 18, welche zu dem Piezoelement 9 führen sollen, abgebogen, und es wird eine Litze 17 angeschweißt, und die Stecker werden in der Senderichtung 4 in das Sensorgehäuse 2 eingepresst. Die Litze wird dabei durch die rückseitige Montageöffnung 10 in das Sensorgehäuse 2 eingebracht und dann mittels eines Lasers und Lots an das Piezoelement 9 angeschweißt. Dann wird der Innenraum der topfförmigen Membran 1 von der Rückseite und somit durch die rückseitige Montageöffnung 10 mit einem Verguß ausgefüllt, und der Ultraschallsensor wird für etwa 24 Stunden gealtert. In einer weiteren Montagelinie wird dann eine Leiterplatte durch die rückseitige Montageöffnung 10 auf Steckerstifte 14 aufgedrückt. Dazu wird die Schneid-Klemm-Technik genutzt. Der vorhandene Hohlraum bzw. der Innenraum 11 des Sensorgehäuses 2 wird schließlich mit einem Elektronikverguss durch die rückseitige Montageöffnung ausgefüllt und in einem Durchlaufofen ausgehärtet. Die Dokumente DE 10 2011 105051, DE 33 47 442, DE 101 25 272, DE 102 01 990 und DE 102 21 303 offenbaren ein Verfahren zum Herstellen eines Ultraschallsensors für ein Kraftfahrzeug, bei welchem für den Ultraschallsensor eine Membran zum Aussenden von Ultraschallsignalen in eine Senderichtung und ein Sensorgehäuse bereitgestellt werden, in und/oder an welchem die Membran befestigt wird, wobei über das Sensorgehäuse der Ultraschallsensor an einer Halterung montierbar ist, die mit einem Verkleidungsteil des Kraftfahrzeugs verbunden wird, wobei das Sensorgehäuse eine in die Senderichtung der Membran weisende Frontseite und eine Rückseite aufweist, welche in eine zur Senderichtung entgegengesetzte rückwärtige Richtung weist, und wobei das Sensorgehäuse an der Rückseite mit einer rückseitigen Montageöffnung für Komponenten des Ultraschallsensors ausgebildet wird, wobei die Membran durch die rückseitige Montageöffnung in die Senderichtung in das Sensorgehäuse eingebracht und durch einen Innenraum des Sensorgehäuses in eine Montageposition an der Frontseite des Sensorgehäuses gebracht und in der Montageposition befestigt wird.

Die meisten Ultraschallsensoren werden heutzutage nach dem oben beschriebenen Prinzip hergestellt. Zwar hat sich dieser Herstellungsprozess als besonders zuverlässig erwiesen, jedoch besteht eine weitere Herausforderung darin, den Herstellungsprozess der Ultraschallsensoren weiterhin zu vereinfachen, um insbesondere die Herstellungskosten zu reduzieren. Insbesondere haben sich dabei einerseits die Befestigung der Membran an dem Entkopplungselement und die Montage dieser Einheit an dem Sensorgehäuse sowie andererseits auch die Anbringung des weiteren Entkopplungsrings und der Schweißprozess mit dem Sensorgehäuse als relativ aufwändig erwiesen. Da heutzutage Ultraschallsensoren auch für Fahrzeuge in niedrigen Preissegmenten, wie beispielsweise in Kleinwagen, eingesetzt werden, besteht entsprechend ein Anpassungsbedarf an die Herstellungsprozesse.

Es ist Aufgabe der Erfindung, eine Lösung aufzuzeigen, wie bei einem Verfahren der eingangs genannten Gattung der Aufwand bei dem Herstellen des Ultraschallsensors im Vergleich zum Stand der Technik reduziert werden kann, ohne die Eigenschaften des Ultraschallsensors selbst zu beeinflussen, und/oder einen kostengünstigeren Sensor bereitzustellen.

Diese Aufgabe wird erfindungsgemäß durch ein Verfahren, durch einen Ultraschallsensor und durch ein Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Ein erfindungsgemäßes Verfahren dient zum Herstellen eines Ultraschallsensors für ein Kraftfahrzeug. Der Ultraschallsensor wird insbesondere zur sichtbaren Montage in einer durchgängigen Aussparung eines Verkleidungsteils des Kraftfahrzeugs ausgebildet. Für den Ultraschallsensor werden eine Membran zum Aussenden von Ultraschallsignalen in eine Senderichtung und ein Sensorgehäuse bereitgestellt. In und/oder an dem Sensorgehäuse wird die Membran befestigt. Über das Sensorgehäuse kann der Ultraschallsensor dann an einer Halterung montiert, beispielsweise eingerastet, werden, die mit dem Verkleidungsteil des Kraftfahrzeugs verbunden wird. Das Sensorgehäuse dient zum Unterbringen von Komponenten des Ultraschallsensors. Das Sensorgehäuse weist eine in die Senderichtung der Membran weisende Frontseite und eine Rückseite auf, welche in eine zur Senderichtung entgegengesetzte rückwärtige Richtung weist. Das Sensorgehäuse wird außerdem an der Rückseite mit einer rückseitigen Montageöffnung für Komponenten des Ultraschallsensors ausgebildet. Erfindungsgemäß ist vorgesehen, dass die Membran durch die rückseitige Montageöffnung in die Senderichtung in das Sensorgehäuse eingebracht und durch einen Innenraum des Sensorgehäuses in eine Montageposition an der Frontseite des Sensorgehäuses gebracht und in der Montageposition befestigt wird.

Anstatt die Membran also von der Frontseite des Sensorgehäuses in die zur Abstrahlrichtung entgegengesetzte Richtung an dem Sensorgehäuse zu befestigen, wird erfindungsgemäß ein Sensorgehäuse mit einem Hohlraum bzw. Innenraum geschaffen, durch welchen die Membran lagerichtig von der Rückseite des Sensorgehäuses hin zur Frontseite gebracht werden kann. Die Membran wird somit in die Senderichtung bzw. in die Abstrahlrichtung montiert und hierbei durch die rückseitige Montageöffnung des Sensorgehäuses in den Innenraum eingeführt und dann in die Montageposition an der Frontseite des Sensorgehäuses gebracht. Der Herstellungsprozess des Ultraschallsensors kann somit im Vergleich zum Stand der Technik wesentlich aufwandsärmer durchgeführt werden, da die Montage ausschließlich von der Rückseite des Sensorgehäuses in die Senderichtung der Membran erfolgen muss. Es erübrigt sich somit die Montage von der Frontseite und somit in eine zur Senderichtung entgegengesetzte Richtung. Durch Verringerung des Herstellungsaufwands können auch Herstellungskosten gespart werden.

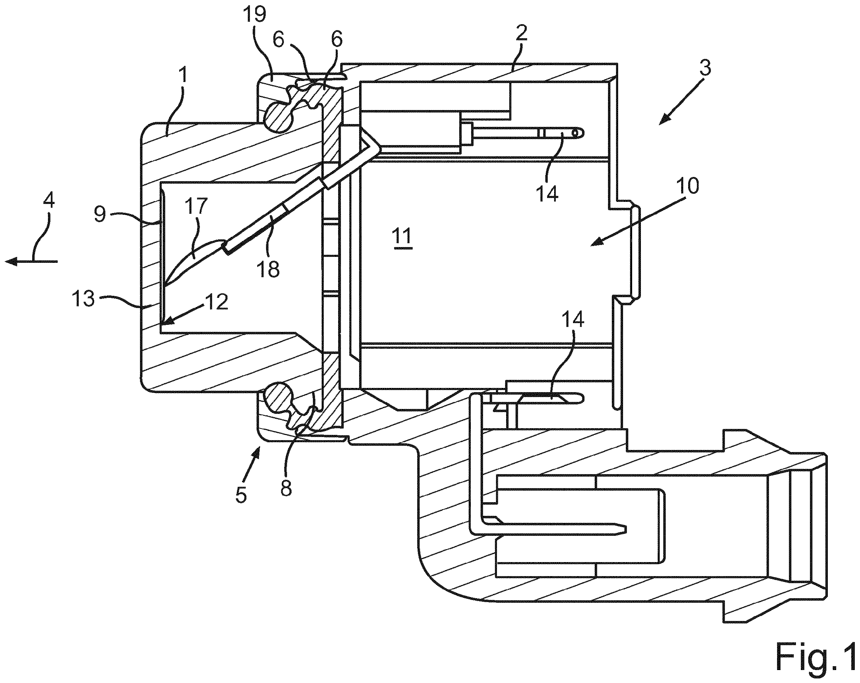

Um die Montage der Membran durch die rückseitige Montageöffnung hindurch zu ermöglichen, kann es vorgesehen sein, dass die üblicherweise im Gehäuse vorhandenen Kontaktelemente (wie insbesondere die Kontaktstifte 14 gemäß Fig. 1) in radialer Richtung und somit senkrecht zur Senderichtung so weit nach außen verschoben werden, dass ein Innenraum geschaffen wird, durch welchen die Membran mit der korrekten Ausrichtung und somit mit dem Membranboden nach vorne hindernisfrei in die Montageposition an der Frontseite des Sensorgehäuses gebracht werden kann.

Es können nun zwei alternative Ausführungsformen vorgesehen sein: Zum einen kann das Sensorgehäuse an seiner Frontseite mit einer den Innenraum begrenzenden frontseitigen Wandung ausgebildet werden, sodass das Sensorgehäuse an der Frontseite geschlossen ausgebildet wird. Zum anderen kann jedoch vorgesehen sein, dass an der Frontseite das Sensorgehäuse mit einer frontseitigen Öffnung für die Membran ausgebildet wird.

Wird das Sensorgehäuse an der Frontseite mit einer den Innenraum begrenzenden frontseitigen Wandung ausgebildet, so kann beim Verbringen der Membran in die Montageposition eine in die Senderichtung weisende Frontseite der Membran, durch welche die Ultraschallsignale ausgesendet werden, also der Membranboden, mit einer dem Innenraum des Sensorgehäuses zugewandten Innenseite der frontseitigen Wandung verbunden werden. Auf diese Art und Weise befindet sich die Membran in der Montageposition vollständig im Innenraum des Sensorgehäuses und kann die Ultraschallsignale durch die frontseitige Wandung des Sensorgehäuses hindurch aussenden und empfangen. Mit anderen Worten ist die Membran bei dieser Ausführungsform verdeckt im Innenraum des Sensorgehäuses angeordnet und kann diesen Wandbereich durchstrahlen. Diese Ausführungsform hat insbesondere den Vorteil, dass sich zusätzliche Maßnahmen hinsichtlich der Abdichtung des Sensorgehäuses an der Schnittstelle zwischen Membran und Sensorgehäuse mit den damit verbundenen Nachteilen hinsichtlich des Montageaufwands und der Kosten erübrigen. Es entstehen auch keine Probleme mit der Eisbildung im Betrieb des Ultraschallsensors. Außerdem braucht die Membran nicht mehr mit einem Oberflächenschutz beschichtet zu werden, wodurch der Aufwand bei der Herstellung weiterhin reduziert wird. Es ergeben sich außerdem grundsätzlich keine Toleranzprobleme bei der Montage der Membran. Der Zwischenraum zwischen der Membran einerseits und dem Gehäuse andererseits kann des Weiteren ohne viel Aufwand durch einen Silikonverguß und/oder einen Schaumstoff, insbesondere einen Einkomponentenschaumstoff, ausgefüllt werden, um eine schwingungstechnische Entkopplung zwischen der Membran und dem Sensorgehäuse zu gewährleisten. Der im Stand der Technik in der durchgängigen Aussparung des Verkleidungsteils des Fahrzeugs eingesetzte Entkopplungsring kann auch entfallen, was einerseits die Anzahl der benötigten Bauteile reduziert und außerdem auch das optische Erscheinungsbild des Verkleidungsteils mit dem Ultraschallsensor verbessert. Die frontseitige Wandung des Sensorgehäuses kann nämlich mit einer Frontfläche des Verkleidungsteils bündig abschließen, sodass sich insgesamt ein geschlossenes Erscheinungsbild dieser Anordnung ergibt. Ein weiterer Vorteil dieser Ausführungsform ist, dass auf einen Kragen der Membran, der zur Befestigung der Membran dient, verzichtet werden kann. Die Membran kann also kragenfrei ausgebildet sein. Zudem kann so der innere Durchmesser des Sensorgehäuses klein gehalten werden, damit die Membran von einer Seite montiert werden kann. Insofern wird auch der Außendurchmesser des Sensorgehäuses klein gehalten bzw. wird nicht größer.

Die Frontseite der Membran kann vorzugsweise über ein Klebepad mit der Innenseite der frontseitigen Wandung verbunden werden. Somit liegt die Frontseite der Membran über das Klebepad an der Innenseite der frontseitigen Wandung an. Es kann dabei beispielsweise ein doppelseitiges Klebepad mit einer Dicke von 0,05 mm verwendet werden. Die Membran wird dabei vorzugsweise zusammen mit dem Klebepad in das Sensorgehäuse lagerichtig eingesetzt und an die Innenseite der frontseitigen Wandung angedrückt. Damit ist die Membran fest mit der frontseitigen Wandung verbunden. Die Verwendung des Klebepads hat insbesondere den Vorteil, dass keine Dosierung eines Flüssigklebers und damit auch keine Warmaushärtung notwendig ist, wodurch die benötigte Herstellungszeit reduziert wird.

Es hat sich als vorteilhaft herausgestellt, wenn die frontseitige Wandung des Sensorgehäuses mit einer Dicke kleiner als 0,5 mm ausgebildet wird, beispielsweise mit einer Dicke von 0,3 mm. Somit ist der Einfluss der frontseitigen Wandung auf die Schwingungseigenschaften der Membran sehr gering, und die frontseitige Wandung beeinflusst nicht die Ausbreitung der Ultraschallwellen.

Die frontseitige Wandung, und insbesondere das gesamte Sensorgehäuse, wird vorzugsweise aus Kunststoff hergestellt. Das Sensorgehäuse ist dabei vorzugsweise einstückig ausgebildet, sodass die frontseitige Wandung mit dem übrigen Bereich des Sensorgehäuses einstückig ist.

Das Sensorgehäuse wird erfindungsgemäß an der Frontseite mit einer frontseitigen Öffnung für die Membran ausgebildet.

Beim Verbringen der Membran in die Montageposition wird die Membran bereichsweise aus dem Innenraum des Sensorgehäuses durch die frontseitige Öffnung hindurch gesteckt und in der Montageposition mit einem Anschlagelement in Anlage gebracht.

In der Montageposition der Membran ragt somit die Frontseite der Membran und somit ein frontseitiger Bereich der Membran durch die frontseitige Öffnung aus dem Sensorgehäuse heraus. Dies hat den Vorteil, dass die Ultraschallsignale durch die Membran hindernisfrei ausgesendet und empfangen werden können und dennoch der Herstellungsaufwand reduziert wird, da die Montage der Membran von der Rückseite des Sensorgehäuses erfolgt.

Die topfförmige Membran kann mit einem radial und somit in Richtung senkrecht zur Senderichtung nach außen abstehenden Kragen ausgebildet werden. Beim Verbringen der Membran in die Montageposition durch die frontseitige Öffnung hindurch kann dann der Kragen der Membran mit dem, insbesondere weichelastischen, Anschlagelement in Anlage gebracht werden. Mit einem solchen Kragen kann eine präzise Positionierung der Membran in der Montageposition und außerdem auch eine zuverlässige Befestigung in axialer Richtung ermöglicht werden.

Vorzugsweise wird die Membran, insbesondere der Kragen, mit einem aus einem weichelastischen Material gebildeten Schwingungsentkopplungselement als Anschlagelement in Anlage gebracht, welches an einem die frontseitige Öffnung begrenzenden Flanschelement des Sensorgehäuses angebracht wird. Durch ein solches Schwingungsentkopplungselement kann die Membran schwingungstechnisch von dem Sensorgehäuse entkoppelt werden. Außerdem fungiert das Schwingungsentkopplungselement auch als eine Dichtung, mittels welcher das Sensorgehäuse abgedichtet wird. Das Schwingungsentkopplungselement kann beispielsweise aus Silikon sein.

In allen Ausführungsformen kann vorgesehen sein, dass durch die rückseitige Montageöffnung in den Innenraum des Sensorgehäuses ein Befestigungselement eingebracht wird, mittels welchem die Membran in der Montageposition entlang der Senderichtung und somit in axialer Richtung lagegesichert gehalten wird. Ein solches Befestigungselement kann beispielsweise aus Kunststoff sein. Es kann in den Innenraum des Sensorgehäuses eingepresst werden. Dazu können in dem Sensorgehäuse beispielsweise längliche Führungselemente vorgesehen sein, welche zum linearen Einführen und Einpressen des Befestigungselements in den Innenraum genutzt werden. Diese Führungselemente können an einer Innenseite des Sensorgehäuses angespritzt sein. Durch ein solches Befestigungselement kann die Membran besonders sicher und rutschfest in der Montageposition befestigt werden und in axialer Richtung zuverlässig gehalten werden. Das Befestigungselement erweist sich insbesondere in der Ausführungsform als vorteilhaft, bei welcher das Sensorgehäuse an der Frontseite mit der oben genannten frontseitigen Öffnung ausgebildet wird, durch welche die Membran hindurch gesteckt wird.

Zwischen die Membran und das Befestigungselement kann auch ein aus einem weichelastischen Material - beispielsweise aus Silikon - ausgebildetes Dämpfungselement angeordnet werden. Dieses Dämpfungselement kann zum Beispiel in Form einer Scheibe ausgebildet sein. Es kann entweder als separates Element zwischen die Membran und das Befestigungselement eingesetzt werden oder es kann an einer Frontseite des Befestigungselements angebracht, insbesondere angespritzt, sein.

Bei allen Ausführungsformen kann auch vorgesehen sein, dass nach dem Verbringen der Membran in die Montageposition ein Zwischenraum zwischen der Membran und dem Sensorgehäuse und/oder ein Innenraum der Membran mit einem Verguss, insbesondere mit einem Einkomponentenverguss, ausgefüllt wird. Es kann beispielsweise ein Silikonverguss, insbesondere ein Einkomponenten-Silikonverguss, und/oder ein Montageschaum, insbesondere ein Einkomponentenschaum, genutzt werden, wie beispielsweise der PU-Schaum, insbesondere mit porigen Hohlräumen. Das Ausfüllen des Zwischenraums zwischen der Membran und dem Sensorgehäuse erweist sich insbesondere bei der Ausführungsform als vorteilhaft, bei welcher das Sensorgehäuse an der Frontseite mit der oben genannten frontseitigen Wandung ausgebildet wird, welche den Innenraum des Sensorgehäuses axial begrenzt. Gerade dann soll auf den Entkopplungsring zwischen dem Ultraschallsensor und dem Verkleidungsteil des Fahrzeugs verzichtet werden. Hier sorgt der zusätzliche Verguss für eine zuverlässige Entkopplung der Membran von dem Sensorgehäuse und somit eine Entkopplung zwischen Membran und Verkleidungsteil. Der Vorteil eines Einkomponenten-Silikonvergusses besteht in den einfachen Anlagen und außerdem darin, dass der Verguss nicht schäumt, insbesondere jedoch porige Hohlräume bildet.

Die Erfindung betrifft außerdem einen Ultraschallsensor für ein Kraftfahrzeug, mit einer Membran zum Aussenden von Ultraschallsignalen in eine Senderichtung, und mit einem Sensorgehäuse, in und/oder an welchem die Membran befestigt ist, wobei das Sensorgehäuse eine in die Senderichtung der Membran weisende Frontseite und eine Rückseite aufweist, welche in eine zur Senderichtung entgegengesetzte rückwärtige Richtung weist, und wobei an der Rückseite das Sensorgehäuse eine rückseitige Montageöffnung aufweist und die Membran durch die rückseitige Montageöffnung in die Senderichtung in das Sensorgehäuse eingebracht und in einer Montageposition an der Frontseite des Sensorgehäuses befestigt ist.

Ein erfindungsgemäßes Kraftfahrzeug umfasst einen erfindungsgemäßen Ultraschallsensor.

Die mit Bezug auf das erfindungsgemäße Verfahren vorgestellten bevorzugten Ausführungsformen und deren Vorteile gelten entsprechend für den erfindungsgemäßen Ultraschallsensor sowie für das erfindungsgemäße Kraftfahrzeug.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand einzelner bevorzugter Ausführungsbeispiele sowie unter Bezugnahme auf die beigefügten Zeichnungen näher erläutert.

Es zeigen:
- Fig. 1: in schematischer Darstellung eine Schnittansicht durch einen Ultraschallsensor gemäß dem Stand der Technik;
- Fig. 2: in schematischer Darstellung eine Schnittansicht durch einen Ultraschallsensor gemäß einer ersten Ausführungsform der Erfindung; und
- Fig. 3: in schematischer Darstellung eine Schnittansicht durch einen Ultraschallsensor gemäß einer zweiten Ausführungsform der Erfindung.

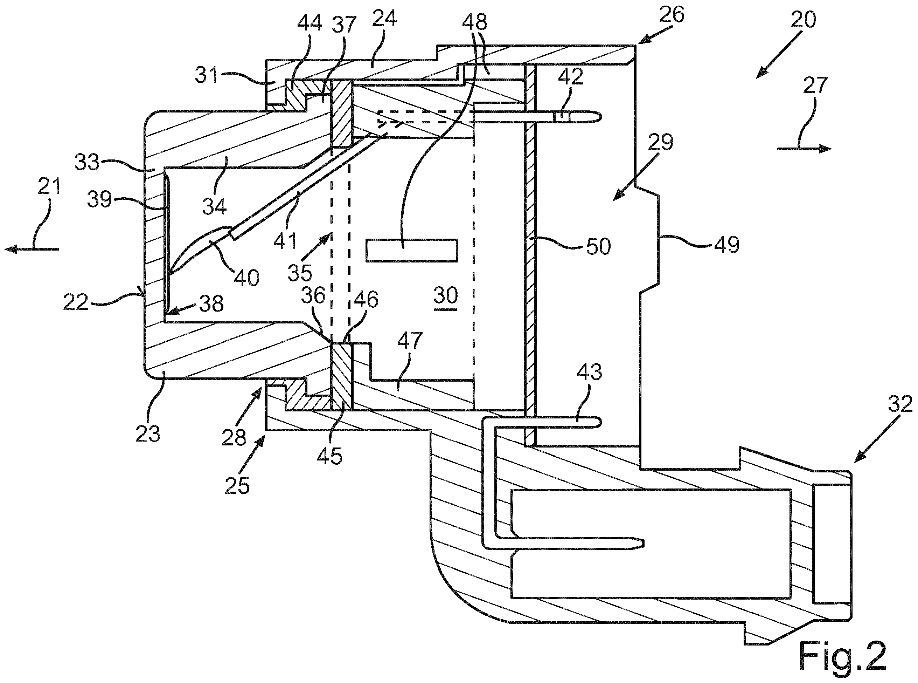

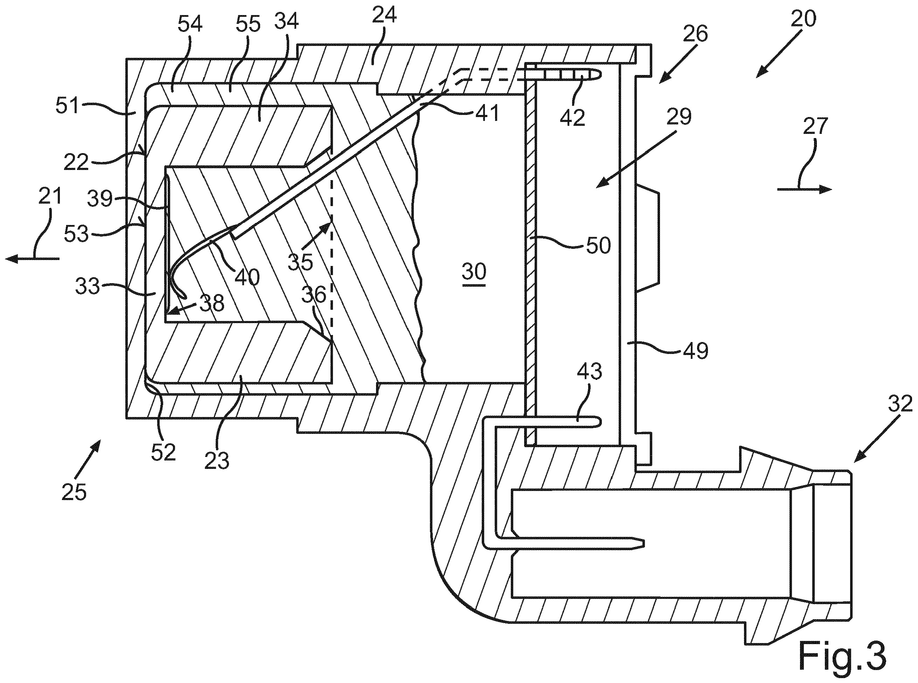

In den Fig. 2 und 3 werden gleiche bzw. funktionsgleiche Elemente mit den gleichen Bezugszeichen versehen.

In Fig. 2 ist ein Ultraschallsensor 20 gemäß einer ersten Ausführungsform gezeigt. Der Ultraschallsensor 20 ist zur Montage an einem Verkleidungsteil eines Kraftfahrzeugs vorgesehen, beispielsweise an einem Stoßfänger. Der Ultraschallsensor 20 ist dabei insbesondere zur sichtbaren und somit nicht verdeckten Montage an dem Verkleidungsteil vorgesehen, sodass nach der Montage an dem Verkleidungsteil eine in Senderichtung 21 weisende Frontseite 22 einer Membran 23 von außerhalb des Kraftfahrzeugs sichtbar ist und beispielsweise mit der äußeren Fläche des Verkleidungsteils bündig abschließt. Es sollte jedoch verstanden werden, dass der Ultraschallsensor alternativ auch verdeckt verbaut sein kann. Der Ultraschallsensor ist dann bei einer Betrachtung des Verkleidungsteils von außen nicht sichtbar und durch das Verkleidungsteil verdeckt. In dem Fall wäre der Ultraschallsensor direkt hinter dem Verkleidungsteil verbaut und Ultraschallsignale würden durch das Material des Verkleidungsteils - üblicherweise Kunststoff - hindurch gesendet und empfangen.

Der Ultraschallsensor 20 umfasst außerdem ein Sensorgehäuse 24, in welchem die Komponenten des Ultraschallsensors 20 geschützt untergebracht sind. Über das Sensorgehäuse 24 kann der Ultraschallsensor 20 an dem Verkleidungsteils befestigt werden. Hierbei wird das Sensorgehäuse 24 beispielsweise mit einer Halterung verbunden und über die Halterung an dem Verkleidungsteil befestigt. Beispielsweise wird das Sensorgehäuse 24 in die Halterung eingerastet. Das Sensorgehäuse 24 ist einstückig ausgebildet und beispielsweise aus Kunststoff.

Das Sensorgehäuse 24 weist eine Frontseite 25 auf, welche in die Senderichtung 21 bzw. in Abstrahlrichtung der Membran 23 zeigt, wie auch eine Rückseite 26, welche in eine entgegengesetzte Richtung 27 zeigt. An der Frontseite 25 ist in dem Sensorgehäuse eine frontseitige Öffnung 28 ausgebildet, die eine Durchgangsöffnung ist. Entsprechend ist auch an der Rückseite 26 eine rückseitige Montageöffnung 29 ausgebildet. Im nichtmontierten Zustand ist ein Innenraum 30 des Sensorgehäuses 24 also lediglich in radialer Richtung und somit senkrecht zur Senderichtung 21 durch das Kunststoffmaterial begrenzt. An der Frontseite 25 weist das Sensorgehäuse 24 außerdem ein umlaufendes Flanschelement 31 auf, welches radial nach innen zeigt und die frontseitige Öffnung 28 radial begrenzt.

Das Sensorgehäuse 24 weist außerdem einen Stecker 32 auf, über welchen der Ultraschallsensor 20 mit einem Steuergerät des Kraftfahrzeugs elektrisch gekoppelt werden kann.

Die Membran 23 ist insgesamt topfförmig ausgebildet und zum Beispiel aus Aluminium. Sie weist einen Membranboden 33 auf, welcher die Frontseite 22 aufweist, wie auch einen zylinderförmigen umlaufenden Mantel 34. An einer der Frontseite 22 gegenüberliegenden Rückseite 35 ist die Membran 23 offen und weist eine Öffnung 36 auf. An der Rückseite 35 ist an dem Mantel 34 außerdem ein radial nach außen weisender Kragen 37 ausgebildet.

An einer dem Innenraum 30 zugewandten Rückseite 38 des Membranbodens 33 ist ein Piezoelement 39 angeordnet, welches zum Anregen der Membran 23 ausgebildet ist. Das Piezoelement 39 wird über eine Litze 40 und ein elektrisches Kontaktelement 41 sowie einen Kontaktstift 42 mit elektrischer Energie versorgt.

Nachfolgend wird ein Verfahren zur Herstellung bzw. zur Montage des Ultraschallsensors 20 gemäß Fig. 2 näher erläutert:
Zunächst wird die Membran 23 und das Sensorgehäuse 24 bereitgestellt. Die Membran 23 wird vor der Montage extern und somit an der Außenseite mit einem Oberflächenschutz beschichtet. Das Sensorgehäuse 24 wird so hergestellt, dass sein Innenraum 30 in radialer Richtung insgesamt eine größere Abmessung als der Außendurchmesser des Kragens 37 der Membran 23 aufweist und die Membran somit durch die rückseitige Montageöffnung 29 in den Innenraum 30 in die in Fig. 2 gezeigte Montageposition an der Frontseite 25 gebracht werden kann. Dazu wird der Stecker 32 mit einem weiteren Kontaktstift 43 im Vergleich zum Stand der Technik gemäß Fig. 1 radial weiter nach außen gebracht.

In einem weiteren Schritt wird von der Innenseite des Sensorgehäuses 24 ein Schwingungsentkopplungselement 44 an dem Flanschelement 31 befestigt, welches gleichzeitig eine umlaufende Dichtung darstellt. Dieses Schwingungsentkopplungselement 44 kann aus einem weichelastischen Material gebildet sein, wie beispielsweise aus Silikon, insbesondere aus dem so genannten LSR (liquid silicone rubber). Dieses Schwingungsentkopplungselement 44 kann beispielsweise an das Flanschelement 31 angespritzt werden.

In einem weiteren Schritt wird die Membran 23 durch die rückseitige Montageöffnung 29 und den Innenraum 30 des Sensorgehäuses 24 hindurch in die Senderichtung 21 lagerichtig in die Fig. 2 gezeigte Montageposition eingebaut. Dabei wird der Kragen 37 axial in Anlage mit dem Schwingungsentkopplungselement 44 gebracht, sodass eine Berührung zwischen der Membran 23 und dem Sensorgehäuse 24 verhindert wird. Das Schwingungsentkopplungselement 44 fungiert hier als Anschlagelement, bis zu welchem die Membran 23 in die Senderichtung 21 bewegt werden kann.

Die Membran 23 wird dann mithilfe eines Dämpfungselements 45 geklemmt, welches in Form einer Scheibe ausgebildet ist und eine zentrale Durchgangsöffnung 46 aufweist, welche die Öffnung 36 der Membran 23 überlappt. Das Dämpfungselement 45 ist aus einem weichelastischen Material bereitgestellt, beispielsweise aus Silikon, wie insbesondere aus dem genannten LSR. Das Dämpfungselement 45 kann optional auch an ein Befestigungselement 47 angespritzt sein, mittels welchem die Membran 23 in der Montageposition lagesicher gehalten wird.

Also wird in einem weiteren Schritt das Befestigungselement 47 aus Kunststoff, das zum Beispiel in Form eines Rings ausgebildet sein kann, durch die rückseitige Montageöffnung 29 in die Senderichtung 21 in den Innenraum 30 eingebracht und eingepresst. Dazu sind an dem Sensorgehäuse 24 Führungselemente 48 in Form von Rippen bereitgestellt, die länglich ausgeführt sind und sich entlang der Senderichtung 21 erstrecken. In dieses Befestigungselement 47, welches die Membran 23 in axialer Richtung und somit entlang der Senderichtung 21 lagesicher hält, kann auch der Kontaktstift 42 sowie das Kontaktelement 41 integriert werden.

Das Befestigungselement 47 dient nun also auch als Träger für den Kontaktstift 42 und das Kontaktelement 41.

In einem weiteren Schritt wird das Piezoelement 39 von der Rückseite 26 durch die rückseitige Montageöffnung 29 in den Innenraum 30 eingebracht und an der Rückseite 38 des Membranbodens 33 positioniert, angedrückt und verklebt. Es kann hier beispielsweise ein Flüssigkleber verwendet werden, optional auch ein kalt aushärtender Klebstoff, welcher bevorzugt unter Luftabschluss aushärtet, wie dies in der DE 10 2011 120 391 A1 beschrieben ist. Alternativ kann auch ein Klebepad genutzt werden.

Dann kann das Kontaktelement 41 von dem Befestigungselement 47 gebogen werden, und es wird die Litze 40 angeschweißt und mit dem Piezoelement 39 verbunden.

In den Innenraum 30 einschließlich des Innenraums der Membran 23 kann dann ein Verguss eingebracht werden, wie beispielsweise ein Einkomponentenschaum (Montageschaum) und/oder ein Einkomponenten-Silikonverguss.

Es wird dann eine Leiterplatte 50 auf die Kontaktstifte 42, 43 aufgesteckt. Anschließend kann ebenfalls der Raum zwischen der Leiterplatte 50 und der Montageöffnung 29 mit einem Verguss ausgefüllt werden, wie beispielsweise einem Einkomponentenschaum und/oder einem Einkomponenten-Silikonverguss. Ergänzend oder alternativ zum Verguss kann auch ein Kunststoffdeckel 49, insbesondere in Form einer Kunststofffolie, verwendet werden, um die rückseitige Montageöffnung 29 zu verdecken. Dieser Kunststoffdeckel 49 kann beispielsweise mit dem Sensorgehäuse 24 mittels Ultraschall verschweißt werden.

Ein Ultraschallsensor 20 gemäß einer zweiten Ausführungsform ist in Fig. 3 dargestellt. Im Unterschied zur Ausführungsform gemäß Fig. 2 ist das Sensorgehäuse 24 nun an der Frontseite 25 geschlossen ausgebildet und weist eine frontseitige Wandung 51 auf, die sich senkrecht zur Senderichtung 21 erstreckt und den Innenraum 30 axial begrenzt. Die frontseitige Wandung 51 hat dabei eine Dicke von 0,3 mm.

Die Membran 23 ist nun kragenfrei ausgebildet, sodass auf den Kragen 37 gemäß Fig. 2 verzichtet wird. Die Frontseite 22 der Membran 23 ist mit einer dem Innenraum 30 zugewandten Innenseite 52 der frontseitigen Wandung 51 über ein Klebepad 53 verbunden. Für die Herstellung der Klebeverbindung zwischen der Frontseite 22 und der Wandung 51 ist somit keine Wärmeeinwirkung erforderlich. Der Kontaktstift 42 ist in das Sensorgehäuse 24 integriert.

Ein Verfahren zur Montage bzw. zur Herstellung des Ultraschallsensors 20 gemäß Fig. 3 wird nachfolgend näher beschrieben:
Weil die Membran 23 nun vollständig innerhalb des Sensorgehäuses 24 liegt und die Ultraschallsignale durch die einstückig mit dem Sensorgehäuse 24 ausgebildete frontseitige Wandung 51 hindurch aussendet, kann nun auf eine zusätzliche Membranbeschichtung bzw. den oben genannten Oberflächenschutz verzichtet werden. Die Membran 23 wird also ohne eine Oberflächenbeschichtung durch die rückseitige Montageöffnung 29 des Sensorgehäuses 24 in den Innenraum 30 und hierdurch bis hin zur Montageposition gemäß Fig. 3 gebracht und dort über das Klebepad 53 mit der Innenseite 52 der Wandung 51 verklebt. Das Klebepad 53 hat eine Dicke von 0,05 mm. Das Gehäuse 24 bzw. die frontseitige Wandung 51 kann außen mit einer Farblackschicht bedeckt sein, insbesondere in Fahrzeugfarbe und/oder in einer Farbe nach Kundenwunsch. So kann bei der Fertigung bzw. Montage bereits ein Ultraschallsensor in der gewünschten Farbe bereitgestellt bzw. montiert werden und eine nachträgliche Lackierung kann entfallen. Alternativ ist auch eine nachträgliche Lackierung möglich, beispielsweise nach der Fertigung bzw. Montage und/oder der Prüfung des Ultraschallsensors. Es kann somit ein hoch qualitativer Gesamteindruck des Verkleidungsteils des Kraftfahrzeugs ermöglicht werden. Somit kann eine einheitliche, nicht unterbrochene Farbgebung durch die Farblackschicht gewährleistet werden.

In einem weiteren Schritt erfolgt die Montage des Piezoelements 39. Dies kann auf die oben bereits beschriebene Art und Weise vorgenommen werden, d.h. analog zur Ausführungsform gemäß Fig. 2. Als vorteilhaft hat es sich erwiesen, wenn das Piezoelement 39 über ein Klebepad an die Rückseite 38 des Membranbodens 33 geklebt wird, da hier keine Aushärtung und keine Wärmeeinwirkung benötigt werden.

Die Herstellung der elektrischen Verbindung zwischen dem Kontaktelement 41 und dem Piezoelement 39 erfolgt ebenfalls auf die oben bereits beschriebene Art und Weise, wobei das elektrische Kontaktelement 41 von dem Gehäuse 24 abgebogen wird.

In einem weiteren Schritt wird ein Zwischenraum 54 zwischen der Membran 23 und dem Sensorgehäuse 24 und optional auch der Innenraum der Membran 23 sowie optional auch ein angrenzender Bereich des Innenraums 30 des Sensorgehäuses 24 mit einem Verguss 55 ausgefüllt. Es wird dabei vorzugsweise ein Einkomponentenverguss verwendet, wie insbesondere ein Einkomponentenschaum und/oder ein Einkomponenten-Silikonverguss.

In einem weiteren Montageschritt wird die Leiterplatte 50 auf die Kontaktstifte 42, 43 aufgesteckt bzw. aufgedrückt.

Um die Leiterplatte 50 gegen Feuchtigkeit zu schützen, werden folgende Lösungen vorgeschlagen: Der Raum zwischen der Leiterplatte 50 und der rückseitigen Montageöffnung 29 kann ebenfalls mit einem Verguss, wie beispielsweise mit einem PU-Deckverguss, ausgefüllt werden. Alternativ kann dieser Zwischenraum mit einem Einkomponentenschaum ausgefüllt werden. Weiterhin alternativ kann auch der Deckel 49, insbesondere in Form einer Folie, eingesetzt und mit dem Gehäuse 24 verschweißt werden, um die rückseitige Montageöffnung 29 zu verdecken. Optional kann eine Innenseite des Deckels 49 bzw. der Folie mit einer Metallschicht, insbesondere aus Kupfer, versehen werden, welche dann als eine zusätzliche EMV-Abschirmung gilt.

## Patentansprüche

1. Verfahren zum Herstellen eines Ultraschallsensors (20) für ein Kraftfahrzeug, bei welchem für den Ultraschallsensor (20) eine Membran (23) zum Aussenden von Ultraschallsignalen in eine Senderichtung (21) und ein Sensorgehäuse (24) bereitgestellt werden, in und/oder an welchem die Membran (23) befestigt wird, wobei über das Sensorgehäuse (24) der Ultraschallsensor (20) an einer Halterung montierbar ist, die mit einem Verkleidungsteil des Kraftfahrzeugs verbunden wird, wobei das Sensorgehäuse (24) eine in die Senderichtung (21) der Membran (23) weisende Frontseite (25) und eine Rückseite (26) aufweist, welche in eine zur Senderichtung (21) entgegengesetzte rückwärtige Richtung (27) weist, und wobei das Sensorgehäuse (24) an der Rückseite (26) mit einer rückseitigen Montageöffnung (29) für Komponenten des Ultraschallsensors (20) ausgebildet wird, wobei die Membran (23) durch die rückseitige Montageöffnung (29) in die Senderichtung (21) in das Sensorgehäuse (24) eingebracht und durch einen Innenraum (30) des Sensorgehäuses (24) in eine Montageposition an der Frontseite (25) des Sensorgehäuses (24) gebracht und in der Montageposition befestigt wird,
**dadurch gekennzeichnet,**
**dass** an der Frontseite (25) das Sensorgehäuse (24) mit einer frontseitigen Öffnung (28) für die Membran (23) ausgebildet wird, wobei beim Verbringen der Membran (23) in die Montageposition die Membran (23) aus dem Innenraum (30) des Sensorgehäuses (24) durch die frontseitige Öffnung (28) hindurch gesteckt und in der Montageposition mit einem Anschlagelement (44) in Anlage gebracht wird.

2. Verfahren nach Anspruch 1,
**dadurch gekennzeichnet, dass**
die Membran (23) topfförmig mit einem radial nach außen abstehenden Kragen (37) ausgebildet wird, wobei beim Verbringen der Membran (23) in die Montageposition durch die frontseitige Öffnung (28) hindurch der Kragen (37) mit dem Anschlagelement (44) in Anlage gebracht wird.

3. Verfahren nach Anspruch 1 oder 2,
**dadurch gekennzeichnet, dass**
die Membran (23) mit einem aus einem weichelastischen Material gebildeten Schwingungsentkopplungselement (44) als Anschlagelement (44) in Anlage gebracht wird, welches an einem die frontseitige Öffnung (28) begrenzenden Flanschelement (31) des Sensorgehäuses (24) angebracht wird.

4. Verfahren nach einem der vorhergehenden Ansprüche,
**dadurch gekennzeichnet, dass**
durch die rückseitige Montageöffnung (29) in den Innenraum (30) des Sensorgehäuses (24) ein Befestigungselement (47) eingebracht wird, mittels welchem die Membran (23) in der Montageposition entlang der Senderichtung (21) lagegesichert gehalten wird.

5. Verfahren nach Anspruch 4,
**dadurch gekennzeichnet, dass**
zwischen die Membran (23) und das Befestigungselement (47) ein aus einem weichelastischen Material ausgebildetes Dämpfungselement (45) angeordnet wird.

6. Verfahren nach einem der vorhergehenden Ansprüche,
**dadurch gekennzeichnet, dass**
nach dem Verbringen der Membran (23) in die Montageposition ein Zwischenraum (54) zwischen der Membran (23) und dem Sensorgehäuse (24) und/oder ein Innenraum der Membran (23) mit einem Verguß (55), insbesondere mit einem Einkomponentenverguß, ausgefüllt wird.

7. Ultraschallsensor (20) für ein Kraftfahrzeug, mit einer Membran (23) zum Aussenden von Ultraschallsignalen in eine Senderichtung (21), und mit einem Sensorgehäuse (24), in und/oder an welchem die Membran (23) befestigt ist, wobei über das Sensorgehäuse (24) der Ultraschallsensor (20) an einer Halterung montierbar ist, die mit einem Verkleidungsteil des Kraftfahrzeugs verbunden wird, wobei das Sensorgehäuse (24) eine in die Senderichtung (21) der Membran (23) weisende Frontseite (25) und eine Rückseite (26) aufweist, welche in eine zur Senderichtung (21) entgegengesetzte rückwärtige Richtung (27) weist, und wobei an der Rückseite (26) das Sensorgehäuse (24) eine rückseitige Montageöffnung (29) aufweist, wobei
die Membran (23) durch die rückseitige Montageöffnung (29) in die Senderichtung (21) in das Sensorgehäuse (24) eingebracht und in einer Montageposition an der Frontseite (25) des Sensorgehäuses (24) befestigt ist,
**dadurch gekennzeichnet,**
**dass** an der Frontseite (25) das Sensorgehäuse (24) mit einer frontseitigen Öffnung (28) für die Membran (23) ausgebildet ist, wobei die Membran (23) aus dem Innenraum (30) des Sensorgehäuses (24) durch die frontseitige Öffnung (28) hindurch gesteckt ist und in der Montageposition mit einem Anschlagelement (44) in Anlage gebracht ist.

8. Ultraschallsensor (20) nach Anspruch 7,
**dadurch gekennzeichnet, dass**
an der Frontseite (25) des Sensorgehäuses (24) eine frontseitige Öffnung (28) ausgebildet ist, durch welche sich die Membran (23) hindurch erstreckt.

9. Kraftfahrzeug mit einem Ultraschallsensor (20) nach einem der Ansprüche 7 oder 8.

## Claims

1. Method for producing an ultrasound sensor (20) for a motor vehicle, in which method, for the ultrasound sensor (20), a diaphragm (23) for emitting ultrasound signals in an emitting direction (21) and a sensor housing (24) are provided, in and/or on which sensor housing the diaphragm (23) is fastened, wherein by way of the sensor housing (24), the ultrasound sensor (20) can be installed on a bracket which is connected to a panelling part of the motor vehicle, wherein the sensor housing (24) has a front side (25), which points in the emitting direction (21) of the diaphragm (23), and a rear side (26), which points in a rearward direction (27) which is opposite to the emitting direction (21), and wherein the sensor housing (24) is, on the rear side (26), formed with a rear-side installation opening (29) for components of the ultrasound sensor (20), wherein the diaphragm (23) is inserted into the sensor housing (24) through the rear-side installation opening (29) in the emitting direction (21), and said diaphragm is placed, through an interior space (30) of the sensor housing (24), into an installed position at the front side (25) of the sensor housing (24), and is fastened in the installed position,
**characterized**
**in that**, on the front side (25), the sensor housing (24) is formed with a front-side opening (28) for the diaphragm (23), wherein, during the placing of the diaphragm (23) into the installed position, the diaphragm (23) is passed through the front-side opening (28) proceeding from the interior space (30) of the sensor housing (24), and in the installed position, said diaphragm is brought into contact with an abutment element (44).

2. Method according to Claim 1,
**characterized in that**
the diaphragm (23) is of pot-shaped form with a radially outwardly protruding collar (37), wherein, during the placing of the diaphragm (23) into the installed position through the front-side opening (28), the collar (37) is brought into contact with the abutment element (44).

3. Method according to Claim 1 or 2,
**characterized in that**
the diaphragm (23) is brought into contact with a vibration decoupling element (44), which is formed from a soft elastic material, as abutment element (44), said element being attached to a flange element (31), which delimits the front-side opening (28), of the sensor housing (24).

4. Method according to one of the preceding claims,
**characterized in that**
a fastening element (47) is inserted through the rear-side installation opening (29) into the interior space (30) of the sensor housing (24), by way of which fastening element the diaphragm (23) is held in the installed position so as to be secured in position along the emitting direction (21).

5. Method according to Claim 4,
**characterized in that**
a damping element (45) formed from a soft elastic material is arranged between the diaphragm (23) and the fastening element (47).

6. Method according to one of the preceding claims,
**characterized in that**,
after the placing of the diaphragm (23) into the installed position, an intermediate space (54) between the diaphragm (23) and the sensor housing (24) and/or an interior space of the diaphragm (23) is filled with a sealing compound (55), in particular with a single-component sealing compound.

7. Ultrasound sensor (20) for a motor vehicle, having a diaphragm (23) for emitting ultrasound signals in an emitting direction (21), and having a sensor housing (24), in and/or on which the diaphragm (23) is fastened, wherein by way of the sensor housing (24), the ultrasound sensor (20) can be installed on a bracket which is connected to a panelling part of the motor vehicle, wherein the sensor housing (24) has a front side (25), which points in the emitting direction (21) of the diaphragm (23), and a rear side (26), which points in a rearward direction (27) which is opposite to the emitting direction (21), and wherein, on the rear side (26), the sensor housing (24) has a rear-side installation opening (29), wherein
the diaphragm (23) is inserted into the sensor housing (24) through the rear-side installation opening (29) in the emitting direction (21), and is fastened, in an installed position, to the front side (25) of the sensor housing (24),
**characterized**
**in that**, on the front side (25), the sensor housing (24) is formed with a front-side opening (28) for the diaphragm (23), wherein the diaphragm (23) is passed through the front-side opening (28) proceeding from the interior space (30) of the sensor housing (24), and in the installed position, said diaphragm is brought into contact with an abutment element (44).

8. Ultrasound sensor (20) according to Claim 7,
**characterized in that**,
on the front side (25) of the sensor housing (24), there is formed a front-side opening (28) through which the diaphragm (23) extends.

9. Motor vehicle having an ultrasound sensor (20) according to either one of Claims 7 and 8.

## Revendications

1. Procédé de fabrication d'un capteur à ultrasons (20) destiné à un véhicule automobile, procédé dans lequel une membrane (23) destinée à émettre des signaux ultrasonores dans une direction d'émission (21) et un boîtier de capteur (24), dans et/ou sur lequel la membrane (23) est fixée, sont prévus pour le capteur à ultrasons (20), le capteur à ultrasons (20) pouvant être monté sur un support, qui est relié à une partie d'habillage du véhicule automobile, par le biais du boîtier de capteur (24), le boîtier de capteur (24) comportant une face avant (25) dirigée dans la direction d'émission (21) de la membrane (23) et une face arrière (26) qui est dirigée dans une direction arrière (27) opposée à la direction d'émission (21), et le boîtier de capteur (24) étant formé sur la face arrière (26) avec une ouverture de montage arrière (29) destinée à des composants du capteur à ultrasons (20), la membrane (23) étant introduite dans le boîtier de capteur (24) par l'ouverture de montage arrière (29) dans la direction d'émission (21) et étant amenée à travers un espace intérieur (30) du boîtier de capteur (24) jusque dans une position de montage sur la face avant (25) du boîtier de capteur (24) et fixée dans la position de montage,
**caractérisé en ce que**
sur la face avant (25) le boîtier de capteur (24) est formé avec une ouverture avant (28) destinée à la membrane (23), lorsque la membrane (23) est amenée dans la position de montage, la membrane (23) étant sortie de l'espace intérieur (30) du boîtier de capteur (24) par l'ouverture avant (28) et est amenée en appui sur un élément de butée (44) dans la position de montage.

2. Procédé selon la revendication 1,
**caractérisé en ce que**
la membrane (23) a la forme d'un pot pourvu d'une collerette (37) qui fait saillie radialement vers l'extérieur, la collerette (37) étant amenée en appui avec l'élément de butée (44) par l'ouverture avant (28) lorsque la membrane (23) est amenée dans la position de montage.

3. Procédé selon la revendication 1 ou 2,
**caractérisé en ce que**
la membrane (23) est amenée en appui sur un élément de découplage de vibrations (44) en matériau souple en tant qu'élément de butée (44) qui est fixé à un élément formant bride (31) du boîtier de capteur (24) qui délimite l'ouverture avant (28).

4. Procédé selon l'une des revendications précédentes,
**caractérisé en ce que**
un élément de fixation (47), permettant d'assurer le maintien de la membrane (23) dans la position de montage le long de la direction d'émission (21), est inséré dans l'espace intérieur (30) du boîtier de capteur (24) par l'ouverture de montage arrière (29).

5. Procédé selon la revendication 4,
**caractérisé en ce que**
un élément d'amortissement (45) conçu en matériau souple est disposé entre la membrane (23) et l'élément de fixation (47).

6. Procédé selon l'une des revendications précédentes,
**caractérisé en ce que**
après que la membrane (23) a été amenée dans la position de montage, un espace intermédiaire (54) entre la membrane (23) et le boîtier de capteur (24) et/ou un espace intérieur de la membrane (23) est rempli d'une matière de scellement (55), en particulier d'une matière de scellement mono-composant.

7. Capteur à ultrasons (20) destiné à un véhicule automobile, ledit capteur comprenant une membrane (23) destinée à émettre des signaux d'ultrasonores dans une direction d'émission (21), et un boîtier de capteur (24) dans et/ou sur lequel la membrane (23) est fixée, le capteur à ultrasons (20) pouvant être monté par le biais du boîtier de capteur (24) sur un support qui est relié à une partie d'habillage du véhicule automobile, le boîtier de capteur (24) comportant une face avant (25) dirigée dans la direction d'émission (21) de la membrane (23) et une face arrière (26) dirigée dans une direction arrière (27) opposée à la direction d'émission (21), et le boîtier de capteur (24) comportant sur la face arrière (26) une ouverture de montage arrière (29),
la membrane (23) étant introduite dans le boîtier de capteur (24) par l'ouverture de montage arrière (29) dans la direction d'émission (21) et étant fixée dans une position de montage sur la face avant (25) du boîtier de capteur (24),
**caractérisé en ce que**
le boîtier de capteur (24) est conçu sur la face avant (25) avec une ouverture avant (28) destinée à la membrane (23), la membrane (23) étant sortie de l'espace intérieur (30) du boîtier de capteur (24) par l'ouverture avant (28) et amenée en appui sur un élément de butée (44) dans la position de montage.

8. Capteur à ultrasons (20) selon la revendication 7, **caractérisé en ce que**
une ouverture avant (28), par laquelle s'étend la membrane (23), est ménagée sur la face avant (25) du boîtier de capteur (24).

9. Véhicule automobile comprenant un capteur à ultrasons (20) selon l'une des revendications 7 ou 8.
